# EUROPEAN PATENT SPECIFICATION

(11) **EP 1 202 312 B1**
(45) Date of publication and mention of the grant of the patent: **07.04.2004**
(21) Application number: 01309198.8
(22) Date of filing: 30.10.2001
(51) Int. Cl.: H01H 33/66

(54) **Vacuum switch container, vacuum switch, method of producing vacuum switch container and method of producing vacuum switch**
Vakuumschalterbehälter, Vakuumschalter, Herstellungsverfahren des Vakuumschalterbehälters und Herstellungsverfahren des Vakuumschalters
Récipient à vide pour commutateur, commutateur à vide, procédé de fabrication du récipient du commutateur à vide et procédé de fabrication du commutateur à vide

(30) Priority: 31.10.2000 JP 2000333119
(43) Date of publication of application: 02.05.2002
(73) Proprietor: NGK SPARK PLUG CO., LTD, Mizuho-ku Nagoya-shi Aichi (JP)
(72) Inventor: Makino, Yusuke, Mizuho-ku, Nagoya, Aichi (JP)
(74) Representative: Brown, Kenneth Richard

(56) References cited:
- EP-A- 0 286 335
- EP-A- 0 838 329
- US-A- 5 800 756

## Description

### BACKGROUND OF THE INVENTION

### 1. FIELD OF THE INVENTION

The present invention relates to avacuum switch container and to a vacuum switch.

### 2. DESCRIPTION OF THE RELATED ART

An example of a known type of an air-tight ceramic container is presented in document EP 0 286 335 A.

Heretofore, for example, when a vacuum switch container made of ceramics in a cylindrical shape for use in a vacuum switch has been produced, a well-known rubber-press method has been adopted.

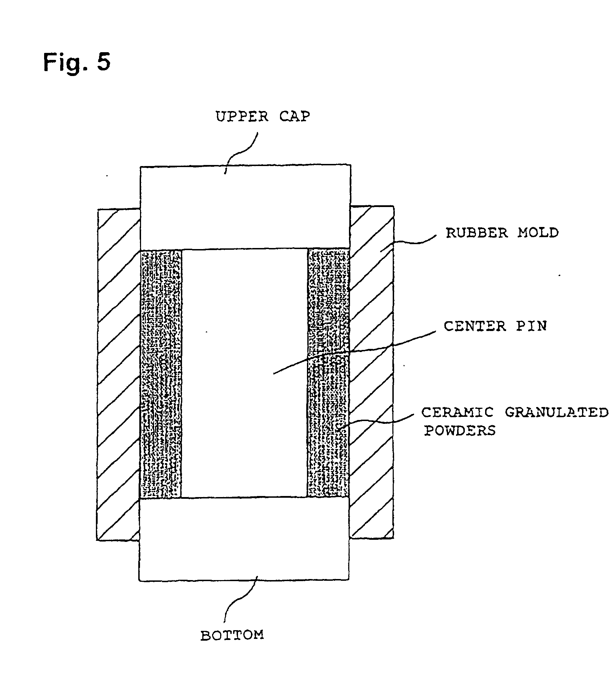

In this rubber-press method, as illustrated in FIG. 5, firstly, ceramic powders are provided in a cylindrical space defined between a center pin made of a metal in a columnar shape and a rubber mold made of rubber in a cylindrical shape and then an upper cap and a bottom are provided such that the cylindrical space is closed. Next, the ceramic powders are pressed from around the rubber mold to form a green compact. Thereafter, the green compact, after it is cut such that it has an appropriate shape, is fired to form a ceramic sintered body which becomes a vacuum switch container.

However, in a case of the above-described rubber-press method, it is necessary to perform cutting after a green compact is formed so as to secure dimensional accuracy, thereby generating a problem that there are many work steps. Further, since the green compact is subjected to cutting, another problem arises, in that an amount of the ceramic material is wasted.

### SUMMARY OF THE INVENTION

The present invention has been achieved to solve the above-described problems and has an object to provide a vacuum switch container, a vacuum switch, a method of producing the vacuum switch container and a method of producing the vacuum switch in an easy manner.

According to a first aspect, the present invention provides a vacuum switch container made of ceramics in a cylindrical shape, characterized in that center line average roughness Ra is 1.0 µm or less and, further, ten-point average roughness Rz is 10.0 µm or less in an axial direction of an outer circumferential surface of the above-described vacuum switch container.

This vacuum switch container (fired product) is intended for use as an insulating member in a vacuum switch.

In this aspect of the present invention, excellent insulation is achieved, since the outer circumferential surface thereof is extremely flat and smooth, thus inhibiting foreign matter (electroconductive substance, for example, carbon or the like) from attaching thereto. Particularly, it is advantageous in relation to insulation performance that, when a grazing layer is not formed on a surface, i.e., the outer circumferential surface, such inhibition of the attachment of foreign matter to the surface is highly effective.

According to a second aspect, the present invention provides a vacuum switch container made of ceramics in a cylindrical shape, in which center line average roughness Ra is 1.0 µm or less and, further, ten-point average roughness Rz is 10.0 µm or less in an axial direction and a circumferential direction (direction along the outer circumferential surface around its axis) of an outer circumferential surface of the above-described vacuum switch container.

In this second aspect of the present invention, it is advantageous that surface roughness is small not only in an axial direction but also in a circumferential direction of the outer circumferential surface whereupon insulation performance is high, as in the first aspect described above.

A glazing layer may be provided on the outer circumferential surface of the above-described vacuum switch container.

Such a glazing layer provided on the outer circumferential surface of the vacuum switch container makes it difficult for dirt to become attached thereto.

In a third aspect, the invention provides a vacuum switch, characterized by being provided with the above-described vacuum switch container as an insulating member.

The vacuum switch according to the third aspect of the present invention is excellent in insulation performance, since it is provided with the above-described vacuum switch container as an insulating member.

### BRIEF DESCRIPTION OF THE DRAWINGS

Fig. 1 is a perspective diagram showing a vacuum switch container according to Example 1;
Fig. 2 is an explanatory diagram showing a production method of a vacuum switch container according to Example 1;
Fig. 3 is an explanatory diagram showing a testing method;
Fig. 4 is an explanatory diagram showing a construction of a vacuum switch according to Example 2; and
Fig. 5 is an explanatoryview of a conventional technique.

### DESCRIPTION OF THE PREFERRED EMBODIMENTS

Hereinafter, embodiments (Examples) of a vacuum switch container and of a vacuum switch according to the present invention are described with reference to the accompanying drawings.

### (Example 1)

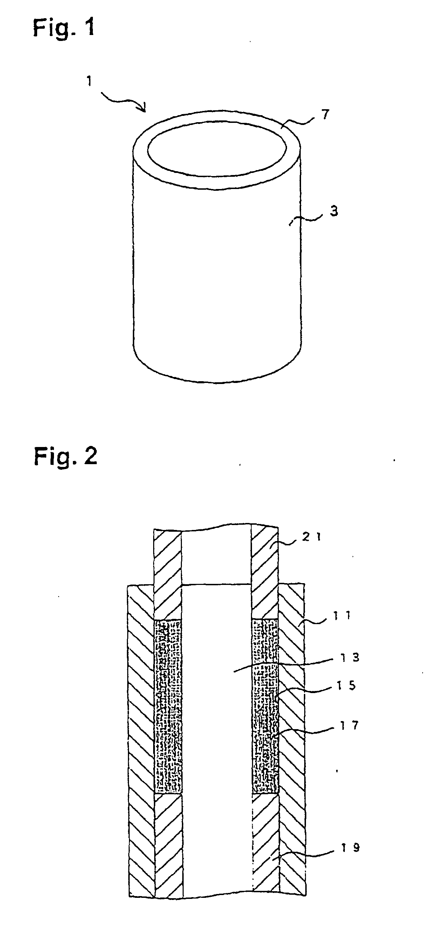

In the present Example, a vacuum switch container and a method of producing a vacuum switch container are explained.
a) Firstly, a composition of the vacuum switch container is explained.
As shown in FIG. 1, a vacuum switch container 1 according to the present Example is used as an insulating member forming an outer cylinder of a vacuum switch, in which an electroconductive layer 7 comprising a metalized layer and an Ni-plated layer is provided on each of the end surfaces of a ceramic fired body 3 which is a base substance.
In this configuration, the above-described ceramic fired body 3 is a cylindrical member having an inner diameter of 90 mm, a thickness of 5 mm and a height of 100 mm, and is a hard fired product produced by performing firing at a high temperature.
In this ceramic fired body 3, surface roughness in axial and circumferential directions on inner and outer circumferential surfaces thereof is extremely small. Namely, central line average roughness Ra is 1.0 µm or less and, further, 10-point average roughness Rz is 10.0 µm or less in the axial and circumferential directions thereof whereupon the ceramic fired body 3 is extremely flat thereby having little irregularity.
b) Next, a method of producing the vacuum switch container 1 is explained.
Firstly, raw material powders of alumina and flux components (calcia, silica and magnesia), a binder (binder containing, for example, an acrylic binder and a dispersant) and water were mixed in a ratio as shown in Table 1 described below and blend-ground by a mill to produce a slurry.

**Table 1**

| Components | | % by weight |
|---|---|---|
| Alumina | | 55.2 |
| Flux components | Calcia | 0.5 |
| | Silica | 2.7 |
| | Magnesia | 0.5 |
| Binder | | 3.4 |
| Water | | 37.7 |

Next, the above-described slurry was atomized and dried to produce ceramic granulated powders.
Next, the above-described ceramic granulated powders were loaded in a metallic die in a predetermined shape and pressed to perform die-molding.
Specifically, as shown in FIG. 2, the above-described ceramic granulated powders 17 were filled in a space 15 in a cylindrical shape defined by an outer mold 11 made of hard metal having an inner diameter of 120 mm and a center pin 13 made of hard metal having an outer diameter of 108 mm and applied with a pressure of 1000 kg/cm² in an axial direction of the cylindrical shape by using a lower punch 19 and an upper punch 21, both of which are in a similar cylindrical shape, from both of a top and a bottom of the space 15 in a cylindrical shape to produce a green compact.
Next, the above-described green compact was fired in an open air at 1600°C to produce a ceramic fired body 3 in a cylindrical shape.
Next, each of end surfaces of the ceramic fired body 3 was ground.
Next, metalizing was performed on the thus ground surface. Specifically, Mo powders, Mn powders, SiO₂ powders, a binder and a solvent were mixed to produce a paste; the paste was applied to the ground surface and fired to form a metalized surface.
Further, Ni plating was applied on the metalized surface thereby forming an electroconductive layer 7 thereon to complete the vacuum switch container 1.
c) Next, Experimental Examples which have been produced for the purpose of confirming an effect of the present Example are explained.
Samples (Nos. 1 to 3) of the ceramic fired body were produced by the production method according to the above-described Examples and, then, surface roughness Ra and Rz in axial and circumferential directions of the outer circumferential surface thereof were determined.
Further, as Comparative Examples, similar samples (Nos. 4 and 5) of ceramic fired bodies were produced by a conventional rubber-press method and, then, surface roughness Ra and Rz in axial and circumferential directions of the outer circumferential surface thereof were determined.
Then, while the above described samples (Nos. 1 to 5) were used, insulation properties thereof were tested by an experimental method in a procedural order of from <1> to <3> described below. Results are shown in Table 2 below.

### (Experimental method)

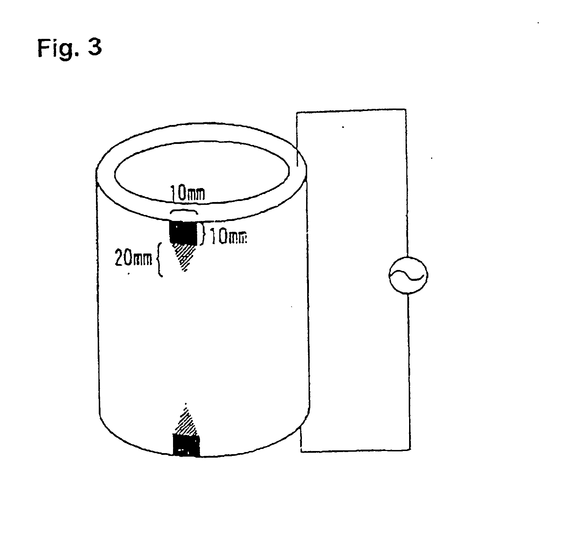

<1> An area of 10 mm square from each of end portions of each sample was entirely smeared by a pencil (graphite).
<2> Next, the thus entirely smeared area was extended in an axial direction by about 20 mm by a finger. Then, an attaching condition of graphite (therefore, condition of dirt) was observed.
<3> As shown in FIG. 3, in an open air, a voltage (alternating voltage of 60 Hz) was applied on the electroconductive layer comprising the metalized layer and the plated layer on each end of the sample in a manner in which the voltage was gradually elevated to determine a break-down voltage (short-circuit voltage).

**Table 2**

| | Nos. | Ra [µm] | | Rz [µm] | | Test results: Break-down voltages [kv] | Evaluations |
|---|---|---|---|---|---|---|---|
| | | Adial directions | Circumferential directions | Adial directions | Circumferential directions | | |
| Examples | 1 | 0.9 | 0.7 | 9.1 | 6.0 | 55 | O |
| | 2 | 0.7 | 0.9 | 6.8 | 6.5 | 54 | O |
| | 3 | 0.9 | 0.6 | 8.7 | 7.2 | 53 | O |
| Comparative Examples | 4 | 3.1 | 1.9 | 21.2 | 11.7 | 36 | X |
| | 5 | 1.3 | 1.2 | 11.0 | 6.4 | 38 | X |

In the column for "Evaluations", "O" indicates that the break-douwn voltage of test results is 40kv or more, and "X" indicates that the break-douwn voltage of test results is less than 40kv.

As is apparent from Table 2, samples of Examples within the scope of the present invention are advantageous, since surfaces thereof are flat leaving no heavy dirt thereon whereby they are excellent in electroinsulation performance.

To contrast, samples of Examples outside the scope of the present invention are not advantageous, since surfaces of the samples are low in flatness leaving a heavy dirt thereon whereby they are inferior in respect of a surface insulation performance.

d) As described above, in the present Example, surfaces of all of the ceramic granulated powders 17 are covered by a metallic die and pressed by the die to produce a green compact and, then, the resultant green compact is fired to produce a ceramic fired body 3 which is extremely flat, since surface roughness of an outer circumferential surface there is small.

Therefore, since cutting of the outer circumferential surface of the green compact to adjust the size thereof as has been performed in the conventional rubber-press method is not necessary, there is an effect that work steps can be simplified. Further, it is advantageous costwise that, since cutting work isnotnecessary, ceramicmaterialisnotwastedand, furthermore, since no cutting mark by the cutting work is left thereon, the surface thereof becomes flat also in this respect.

Namely, since the surface of the ceramic fired body 3 in the present Example is extremely flat, it is difficult for foreign matter (electroconductive substance or the like) such as carbon generated during production operation or the like to become attached thereto; therefore, there is an effect that insulation performance of the completed vacuum switch container 1 is high. Particularly, this effect remarkably appears when a glazing layer is not provided.

Further, in the above Example, a glazing layer was not provided on the outer circumferential surface of the ceramic fired body 3; however, such a glazing layer may be provided.

### (Example 2)

Next, Example 2 is explained; however, explanations of similar portions to those in the above-described Example 1 are omitted.

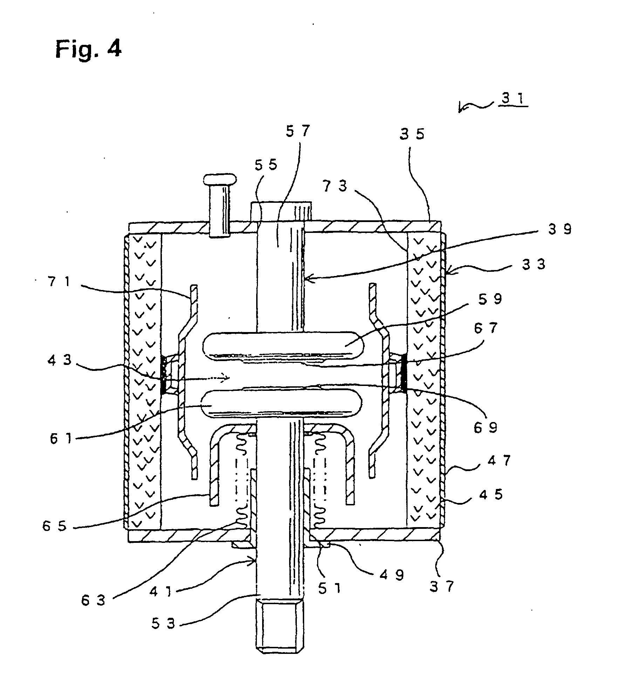

The present Example is a case in which the vacuum switch container according to the above-described Example 1 is used for a vacuum switch.
a) Namely, the vacuum switch according to the present Example is a high load switch suitable for turning on/off a high voltage and a large current while an electrode and the like are contained in the vacuum switch container.
   In detail, as shown in FIG. 4, the vacuum switch (vacuum load switch) 31 comprises an insulation valve 33 which is the vacuum switch container, first and second end caps 35 and 37 attached such that end portions of the insulation valve 33 are closed, a fixed electrode 39 which has been attached to the first end cap 35 such that it protrudes inside the insulation valve 33 and a movable electrode 41 slidably provided on the second end cap 37, and a contact 43 formed by the fixed electrode 39 and the movable electrode 41.
   The above-described insulation valve 33 comprising a base substance of a ceramic fired body 45 (similar to that in the above-described Example 1) of 92% by weight of alumina, is cylindrical in shape, having an inner diameter of 90 mm, a wall thickness of 5 mm and a length of 100 mm. Further, a glazing layer 47 is provided on an outer circumferential surface of this insulation valve 33.
   The above-described first and second end caps 35 and 37 are each formed by a discoid Kovar (Fe-Ni-Co) plate in a center of which a hole 51 is provided for firmly securing the fixed electrode 39 and a guide 49 thereto. This guide 49 is provided such that a movable shaft 53 of the movable electrode 41 easily slides therein.
   In the above-described fixed electrode 39, a rear end thereof is formed as a fixed shaft 57 which is firmly secured to the hole 55 while a leading end thereof is formed as an annular shaped electrode 59 which protrudes inside the insulation valve 33.
   In the above-described movable electrode 41, a rear end thereof is formed as a movable shaft 53 which slidably moves inside the guide 49 while a leading end thereof is formed as an electrode 61 which contacts the electrode 59 on the inner end of the fixed electrode 39. This movable electrode 41 allows a turning-on/off operation in a vacuum condition by a pleated metallic bellows 63 provided between the movable shaft 53 which is adjacent to the electrode 61 and the second end cap 37.
   The above-described metallic bellows 63 is embraced by a bellows cover 65 to prevent metallic vapor to be generated from the electrodes 59 and 61 (namely, terminals 67 and 69 in the leading ends thereof) from directly contacting it at the time of turning on/off current.
   The above-described contact 43 is constructed such that respective terminals 67 and 69 of the electrodes 59 and 61 which come to contact with each other are made of high-melting point tungsten-based sintered metal, which prevents them becoming welded to each other by a vacuum arc to be generated therebetween.
   Further, an arc shield 71 is provided such that it embraces the contact 43. This arc shield 71 is bonded to an inner circumferential wall 73 of the insulation valve 33 by means of blazing, so as to prevent the above-described metallic vapor from being attached to the inner circumferential wall 73 of the insulation valve 33 and causing deterioration of its insulation performance.
b) In the present Example, after the vacuum switch container (insulation valve 33) has been produced by the production method according to the above-described Example 1, various types of switch members, such as the fixed electrode 39, the movable electrode 41 and the like, which are necessary for the vacuum switch are arranged inside the insulation valve 33 to complete the vacuum switch.
c) As described above, in the present Example, it is also advantageous costwise that, since the vacuum switch is produced by using the vacuum switch container according to the above-described Example 1, the production process thereof can be simplified. Further, there is an effect that the insulation performance of the thus produced vacuum switch is high.
   Furthermore, the present invention is by no means limited to the foregoing Examples, but various types of embodiments may of course be executed without departing from the scope of the present invention, as defined by the appended claims.

## Claims

1. A vacuum switch container made of ceramics in a cylindrical shape, **characterized in that** a center line average roughness Ra of an outer circumferential surface of said vacuum switch container is 1.0 µm or less in an axial direction of said outer circumferential surface and, further, a ten-point average roughness Rz of an outer circumferential surface of said vacuum switch container is 10.0 µm or less in said axial direction.

2. A vacuum switch container according to claim 1, further **characterized in that** a center line average roughness Ra of said outer circumferential suface of said vacuum switch container is 1.0 µm or less in a circumferential direction of said outer circumferential surface, and, the ten-point average roughness Rz of said outer circumferential surface of saidvacuum switch container is 10.0 µm or less in said circumferential direction.

3. A vacuum switch container according to Claim 1 or Claim 2, **characterized in that** a glazing layer is provided on the outer circumferential surface of said vacuum switch container.

4. A vacuum switch, **characterized by** being provided with a vacuum switch container according to any of Claims 1 to 3 as an insulating member.

## Patentansprüche

1. Vakuumschalterbehälter aus Keramik in zylindrischer Form, **dadurch gekennzeichnet, daß** eine Mittellinien-Durchschnittsrauhigkeit Ra einer Außenumfangsfläche des Vakuumschalterbehälters in einer Axialrichtung der Außenumfangsfläche höchstens 1,0 µm beträgt und ferner eine Zehnpunkt-Durchschnittsrauhigkeit Rz einer Außenumfangsfläche des Vakuumbehälters in der Axialrichtung höchstens 10,0 µm beträgt.

2. Vakuumschalterbehälter gemäß Anspruch 1, ferner **dadurch gekennzeichnet, daß** eine Mittellinien-Durchschnittsrauhigkeit Ra der Außenumfangsfläche des Vakuumschalterbehälters in einer Umfangsrichtung der Außenumfangsfläche höchstens 1,0 µm beträgt und die Zehnpunkt-Durchschnittsrauhigkeit Rz der Außenumfangsfläche des Vakuumschalterbehälters in der Umfangsrichtung höchstens 10,0 µm beträgt.

3. Vakuumschalterbehälter gemäß Anspruch 1 oder 2, **dadurch gekennzeichnet, daß** auf der Außenumfangsfläche des Vakuumschalterbehälters eine Glasurschicht vorgesehen ist.

4. Vakuumschalter, **dadurch gekennzeichnet, daß** er mit einem Vakuumschalterbehälter gemäß einem der Ansprüche 1 bis 3 als Isolierelement versehen ist.

## Revendications

1. Récipient en céramique de forme cylindrique pour interrupteur à vide, **caractérisé en ce qu'**une rugosité moyenne Ra d'axe médian d'une surface circonférentielle extérieure dudit récipient pour interrupteur à vide est inférieure ou égale à 1,0 µm dans une direction axiale de ladite surface circonférentielle extérieure et, en outre, une rugosité moyenne à dix points Rz d'une surface circonférentielle extérieure dudit récipient pour interrupteur à vide est inférieure ou égale à 10,0 µm dans ladite direction axiale.

2. Récipient pour interrupteur à vide selon la revendication 1, **caractérisé en outre en ce qu'**une rugosité moyenne Ra d'axe médian de ladite surface circonférentielle extérieure dudit récipient pour interrupteur à vide est inférieure ou égale à 1,0 µm dans une direction circonférentielle de ladite surface circonférentielle extérieure et, **en ce que** la rugosité moyenne à dix points Rz de ladite surface circonférentielle extérieure dudit récipient pour interrupteur à vide est inférieure ou égale à 10,0 µm dans ladite direction circonférentielle.

3. Récipient pour interrupteur à vide selon la revendication 1 ou 2, **caractérisé en outre en ce qu'**une couche de vitrification superficielle est placée sur la surface circonférentielle extérieure dudit récipient pour interrupteur à vide.

4. Interrupteur à vide, **caractérisé en ce qu'**il est muni d'un récipient pour interrupteur à vide conforme à l'une quelconque des revendications 1 à 3 en tant qu'élément isolant.
